# FASCICULE DE BREVET EUROPEEN

(11) **EP 2 002 531 B1**
(45) Date de publication et mention de la délivrance du brevet: **06.03.2019**
(21) Numéro de dépôt: 07731835.0
(22) Date de dépôt: 28.03.2007
(51) Int. Cl.: H02K 29/03, H02K 1/14, H02K 21/16

(54) **MOTEUR ELECTRIQUE POLYPHASE NOTAMMENT POUR L'ENTRAINEMENT DE POMPES OU DE VENTILATEURS**
MEHRPHASEN-ELEKTROMOTOR INSBESONDERE ZUM ANTRIEB VON PUMPEN ODER VENTILATOREN
POLYPHASE ELECTRIC MOTOR ESPECIALLY FOR DRIVING PUMPS OR VENTILATORS

(30) Priorité: 30.03.2006 FR 0651117
(43) Date de publication de la demande: 17.12.2008
(73) Titulaire: MMT SA, 6304 Zug (CH)
(72) Inventeur: PRUDHAM, Daniel, 25220 Thise (FR)
(74) Mandataire: IP Trust
(86) Numéro de dépôt international: PCT/FR2007/051027
(87) Numéro de publication internationale: WO 2007/113436

(56) Documents cités:
- EP-A1- 0 182 702
- EP-A2- 1 422 806
- WO-A-2005/074099
- WO-A-2006/029972
- WO-A2-2006/020601
- DE-A1- 10 124 415
- DE-A1- 19 905 748
- FR-A2- 2 201 575
- US-A- 5 880 551
- US-A1- 2005 099 086

## Description

La présente invention concerne un moteur électrique polyphasé, notamment pour des applications d'entraînement de pompes ou de ventilateurs dans l'industrie automobile.

Dans le domaine industriel et automobile, le choix d'un moteur polyphasé pour l'entraînement de pompes ou de ventilateurs se réalise en fonction de critères qui sont tout autant des critères de coûts, de performances et de durée de vie. En terme de performances sont évalués principalement le rendement et le bruit. Pour réaliser un bon rendement il est nécessaire de disposer d'un volume de cuivre suffisant afin de limiter les pertes Joule, et d'un circuit magnétique court pour minimiser les pertes fer. Pour diminuer le niveau de bruit autant que possible, on recherchera dans le moteur un bon équilibre des forces radiales ainsi qu'un couple résiduel faible. Le coût du moteur est lié au coût des matériaux mais aussi au coût de réalisation et il est particulièrement important de proposer une solution économique pour la réalisation du bobinage.

On connaît dans l'état de la technique des moteurs, tels que décrits par le brevet allemand DE19905748, présentant un bon équilibre des forces radiales mais la structure de ces moteurs ne permet pas une réalisation simple du bobinage en bobinant séparément les bobines et en les insérant dans le stator. En effet la maîtrise du couple résiduel nécessite dans ces moteurs de disposer de pôles de forme les plus larges possible et le bobinage doit être réalisé en insérant le fil de cuivre par des encoches particulièrement étroites. Pour faciliter le bobinage certains moteurs présentent alors un stator en plusieurs pièces, mais la simplification du bobinage se fait alors au détriment de la réalisation du circuit statorique qui devient complexe de par l'assemblage d'un grand nombre de pièces et donc coûteux.

On connaît également dans l'état de la technique des moteurs permettant une réalisation particulièrement simple et économique du bobinage sur un stator réalisé en une seule pièce, tout en assurant un couple résiduel faible. Toutefois ces moteurs ne sont pas complètement équilibrés en terme de forces radiales, ce qui se révèle un inconvénient en terme de bruit et également de durée de vie pour les paliers. De tels moteurs sont par exemple décrits dans le brevet américain US5880551 de la demanderesse.

Le document WO2006/029972 décrit un moteur électrique polyphasé formé par une partie statorique excitée par des bobines électriques et par un rotor présentant des aimants permanents, la partie statorique présentant : des dents larges et des dents étroites s'étendant radialement depuis une couronne annulaire le rapport entre la largeur d'une dent large et la largeur d'une dent étroite étant compris entre 2 et 8, la largeur d' encoche étant supérieure à la largeur d'une dent étroite.

La présente invention a donc pour but de proposer une solution économique et robuste, adaptée aux grandes séries, présentant un très bon niveau de performances en terme de rendement grâce à son volume de cuivre et son circuit magnétique court, et en terme de bruit de par son équilibre des forces radiales et son faible niveau de couple résiduel.

À cet effet, l'invention concerne un moteur polyphasé pour l'entraînement d'un pompe ou d'un ventilateur pour automobile, formé par une partie statorique excitée par des bobines électriques et par un rotor aimanté présentant N paires de pôles aimantés radialement en sens alternés, la partie statorique présentant des dents larges et des dents étroites s'étendant radialement depuis une couronne annulaire. Les dents larges, qui portent les bobinages, ont une largeur supérieure ou égale au double de la largeur des dents étroites. Le dimensionnement des largeurs de dents, mesurées sur le diamètre intérieur du stator, utilise un couple de valeur, respectivement pour les dents larges et les dents étroites, ayant la particularité d'annuler les couples résiduels du moteur. La forme du stator, qui présente des dents bobinées de section rectangulaire constante, permet l'introduction de chaque bobine autour d'une dent large, les bobines étant réalisées séparément hors du stator. Pour cela, la largeur d'encoche qui permet de recevoir le bobinage est supérieure à la largeur d'une dent étroite, les dites largeurs étant mesurées sur le diamètre intérieur du stator.

Selon un mode de réalisation, le stator comporte 12 dents, et les bobinages sont disposés autour des dents larges. Le rapport entre la largeur d'une dent large et la largeur d'une dent étroite est compris entre 2 et 8. Selon un mode de realization particulier, les bobinages sont disposés autour des dents larges, en ce que le rapport entre la largeur d'une dent large et la largeur d'une dent étroite est compris entre 4 et 5. Selon un mode de réalisation, le stator présente un nombre de dents étroites égal au nombre de dents larges. Selon un autre mode de realization,, le stator présente un nombre de dents étroites multiple du nombre de dents larges.

Selon une variation, le stator présente un bobinage sur chacune des dents larges. Selon une autre variation, , le stator présente un bobinage sur une dent large sur deux.

Selon un mode de réalisation, chaque dent bobinée présente dans le plan transversal une section trapézoïdale sensiblement constante. Selon un mode de réalisation particulier, les bobines sont bobinées séparément puis insérées dans le stator.

Selon un autre mode de réalisation particulier, l'extrémité frontale de l'épanouissement polaire est située dans le plan de la face frontale intérieure de la bobine.

Le moteur polyphasé comporte des éléments de détection de position agissant avec le rotor. Le stator comporte des trous de fixation placés à l'intérieur d'un diamètre inférieur au diamètre extérieur des bobinages. Le stator présente sur sa surface externe des embrèvements sdisposés entre les bobines.

L'invention sera mieux comprise à la lecture de la description qui suit, faisant référence aux dessins annexés où :
la figure 1 représente une vue en coupe transversale d'un moteur selon l'invention. Le moteur comporte un stator (1) présentant 6 dents larges (11 à 16) et 6 dents étroites (17 à 22) et un rotor (2) présentant N paires de pôles (A1 à A10) aimantés radialement en sens alternés,
la figure 2 représente une vue en coupe transversale d'un moteur selon l'art antérieur, le stator comportant 6 pôles (51 à 56),
la figure 3 représente une vue en coupe transversale d'un moteur selon l'art antérieur, le stator comportant 12 pôles (71 à 82),
la figure 4 représente une vue en coupe transversale d'un moteur selon l'art antérieur, le stator comportant 6 pôles larges (P1 à P6) et 6 pôles étroits (P7 à P12),
la figure 5 représente un graphique montrant l'évolution de la constante de couple par ampère-tour en fonction de la largeur de dent respectivement pour des stators à 6 et 12 dents,
la figure 6 représente une courbe montrant l'évolution du couple résiduel en fonction de la largeur de dent d'un stator à 6 dents,
la figure 7a représente une vue en coupe transversale d'un moteur selon l'invention, le rapport des largeurs entre dent large et dent étroite étant particulièrement grand,
la figure 7b représente une vue en coupe transversale d'un moteur selon l'invention, le stator (1) présentant sur sa surface extérieure 6 embrèvements (101 à 106) disposés entre les bobines,
la figure 8 représente une vue en coupe transversale d'un moteur selon l'invention, le stator (1) comportant 3 dents larges (111 à 113) et 9 dents étroites (117à125).

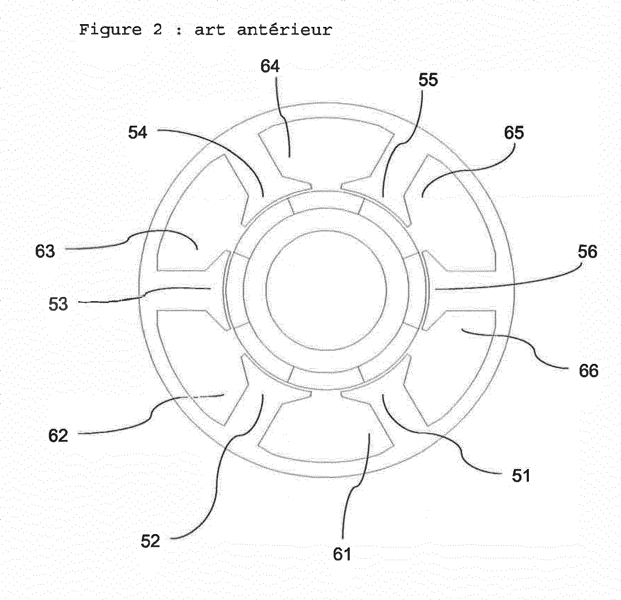

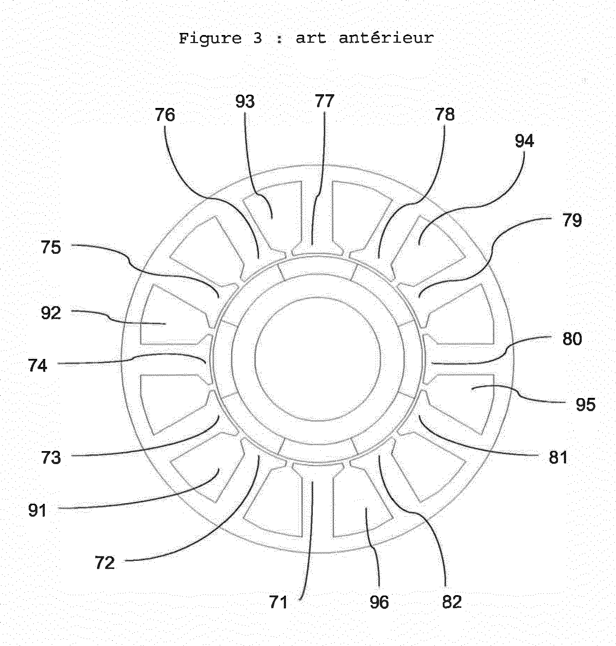

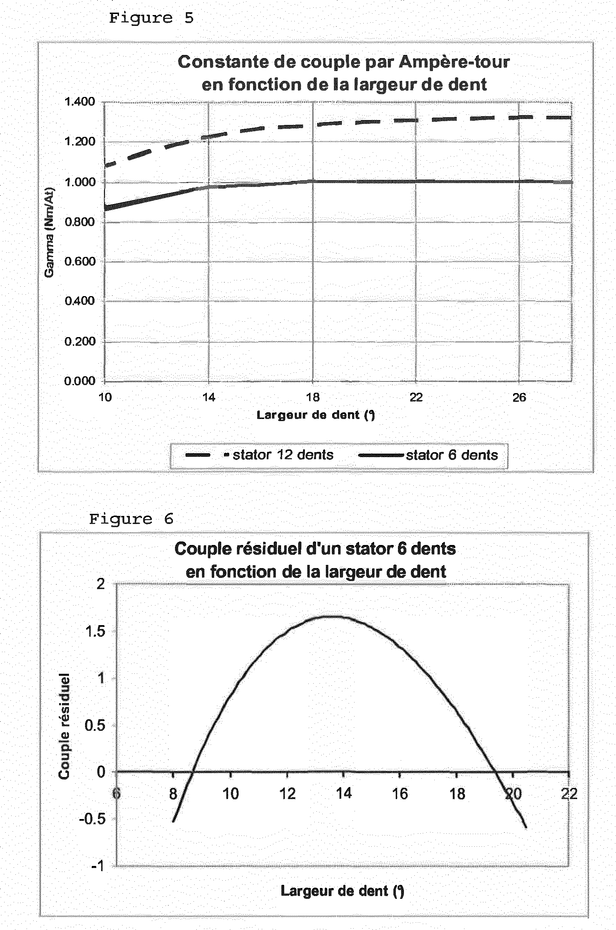

Dans les moteurs de l'art antérieur tels que représentés par les figures 2 et 3, un faible couple résiduel est recherché en élargissant au maximum les pôles statoriques (51 à 56 et 71 à 82), ce qui laisse une faible largeur d'encoche pour introduire le fil de bobinage. Ceci rend la réalisation des bobinages (61 à 66 et 91 à 96) complexe, difficile à automatiser et n'autorise pas de très bon coefficient de remplissage. Et ce qui est vrai pour le stator 6 dents, est encore accentué pour le stator 12 dents. Pourtant comme le montre la figure 5, il y a un net avantage de performance pour le stator 12 dents avec une constante de couple par ampère-tour augmentée de plus de 30%.

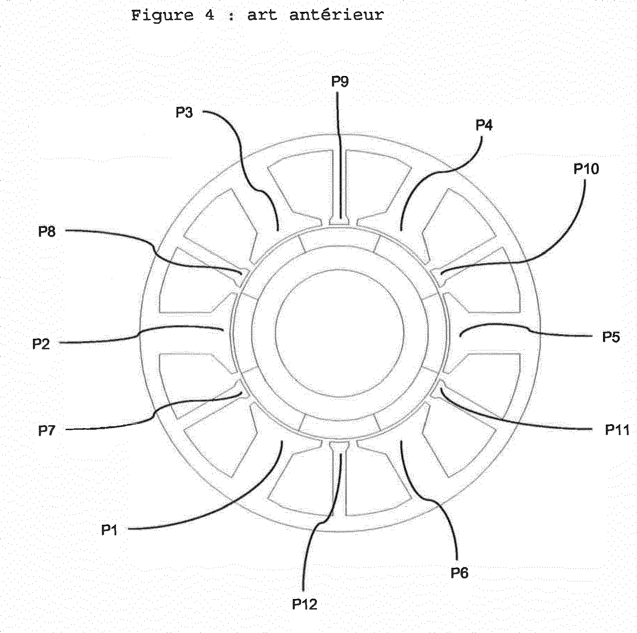

Dans les moteurs de l'art antérieur tels que représentés par la figure 4, des pôles étroits (P7 à P12) sont introduits dans la structure statorique entre les pôles larges (P1 à P6). Ceci permet effectivement de bénéficier de l'augmentation du couple par ampère-tour sans sacrifier le volume de cuivre. Mais là encore les pôles statoriques occupent la quasi-totalité de la circonférence intérieure du stator et ne laissent que des encoches de faible largeur pour introduire le fil de bobinage. C'est cette quasi continuité de la circonférence intérieure du stator qui permet ici d'obtenir de faibles couples résiduels pour le moteur.

La figure 6 montre que contrairement à ce qui est pratiqué habituellement des pôles statoriques étroits permettent également d'obtenir de très faibles couples résiduels. En effet comme le montre ici la courbe de couple résiduel tracée en fonction de la largeur de dent d'un stator 6 dents, il existe 2 largeurs de dents pour lesquelles le couple résiduel est nul. Pour un moteur on pourra donc déterminer 2 largeurs de dents permettant d'obtenir un faible couple résiduel. Ces 2 largeurs de dents correspondent d'une part à une dent relativement large et d'autre part à une dent de largeur inférieure à la moitié.

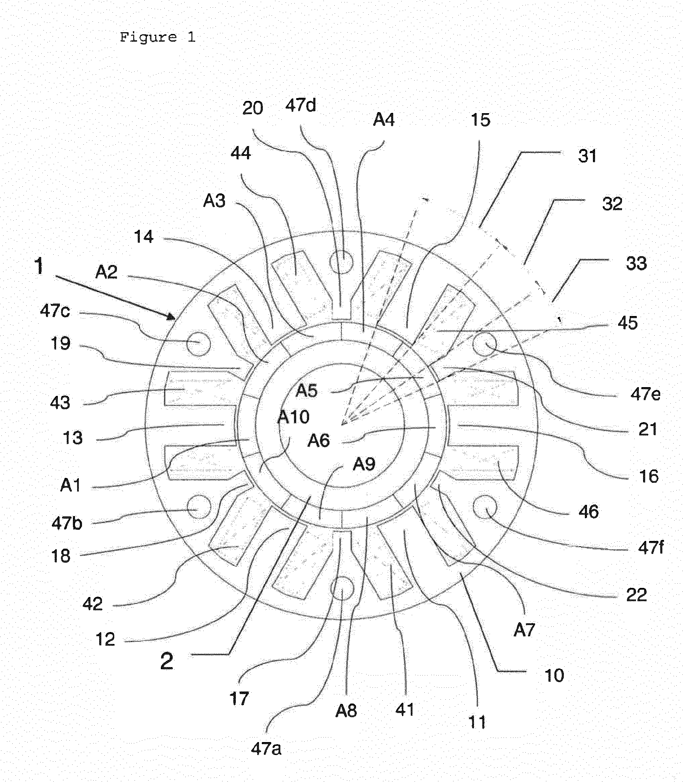

Le moteur selon l'invention, représentée en figure 1, reprend une structure à 12 dents qui assure la meilleure constante de couple et utilise au stator (1) des dents larges (11 à 16) et des dents étroites (17 à 22) permettant de garantir un très faible couple résiduel par un choix judicieux des largeurs de pôles. Le rapport des largeurs entre dents larges et dents étroites est alors de 2,2.

Les bobinages (41 à 46) sont placés autour des dents larges (11 à 16) ce qui permet d'obtenir le maximum de couple par ampère-tour du moteur. Ce couple par ampère-tour est en effet fonction de la largeur (31) de dent bobinée, mais est très peu influencé par la largeur (33) des dents non bobinées pour autant que ces dernières ne présentent pas de saturation.

L'utilisation de pôles étroits pour les dents non bobinées permet de disposer d'une encoche très large pour le passage du bobinage. La largeur (32) de cette encoche est supérieure à la largeur (33) d'une dent étroite. Cette géométrie particulière de stator permet donc de réaliser les bobines (41 à 46) séparément puis de venir les insérer dans le stator autour des dents larges (11 à 16). De cette façon la longueur de bobinage, et donc le volume de cuivre, sont optimisés et les bobines peuvent affleurer l'épanouissement polaire de la dent ce qui minimise le flux de fuite.

Avantageusement le stator (1) comporte entre les bobines (41 à 46) des trous (47a à 47f) pour le passage d'organes de fixation sur un support, par exemple des vis ou des rivets. La géométrie du stator permet de placer ces trous (47a à 47e) à l'intérieur du diamètre extérieur des bobines, ce qui permet de prévoir un assemblage du moteur sans tube extérieur. Cela permet de diminuer le nombre de pièces et constitue un gain en masse et en encombrement, le diamètre du stator (1) devenant le diamètre extérieur du moteur.

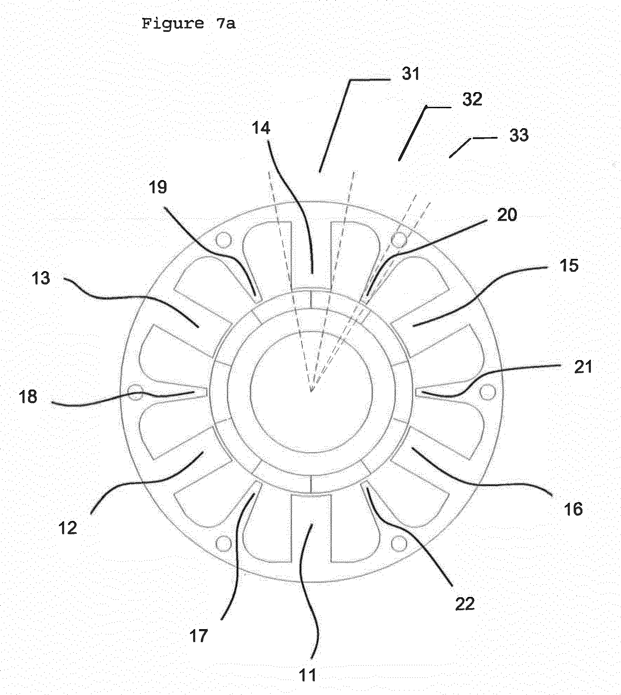

Le moteur de la figure 7a représente un mode de réalisation préféré pour l'invention. Le rapport des largeurs entre dents larges (11 à 16) et dents étroites (17 à 22) est alors supérieur à 4, ce qui permet d'augmenter la section de cuivre des bobinages et également de diminuer la perméance de fuite de dent à dent.

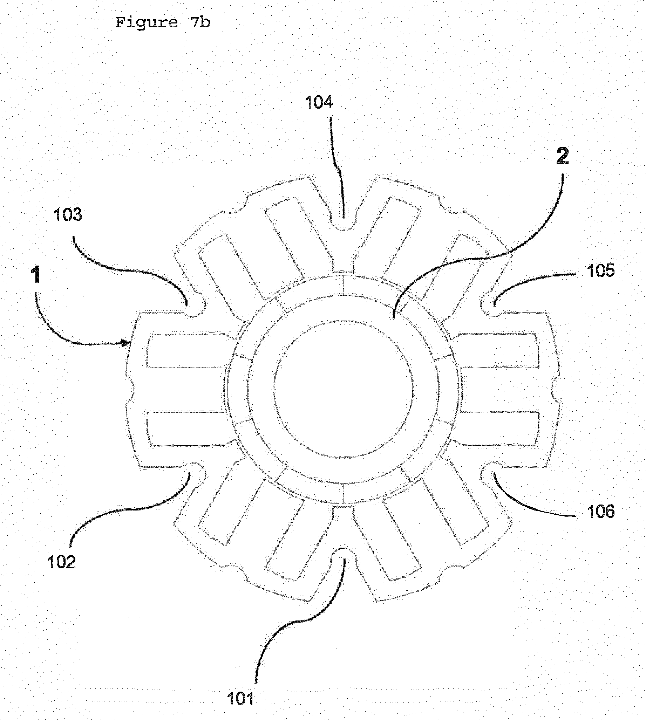

La figure 7b représente un mode de réalisation préféré pour l'invention. Une des limitations des moteurs électriques étant leur échauffement, il est important d'améliorer les surfaces d'échange thermique avec l'extérieur. A cet effet le stator comporte sur sa surface extérieure des embrèvements qui permettent d'augmenter de manière importante sa surface d'échange avec l'extérieur. Ces embrèvements par ailleurs ne perturbent pas le trajet des lignes de champ magnétique car le flux généré par chacun des pôles bobinés se referme par les 2 pôles adjacents.

Les moteurs selon l'invention et présentés aux figures 1 et 7 sont parfaitement équilibrés en terme de forces radiales avec et sans courant du fait de leur parfaite symétrie diamétrale. Pour des raisons de coût on peut toutefois préférer dans certaines applications réduire le nombre de bobines. Dans ce cas, seulement une dent large sur 2 sera bobinée et on acceptera la présence de forces
radiales lors de l'alimentation en courant des bobines.

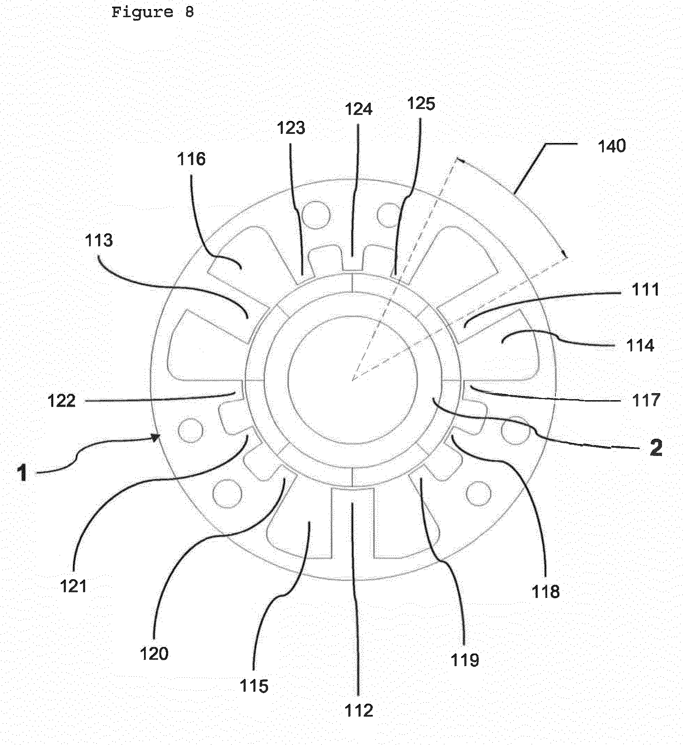

La figure 8 montre une réalisation avec seulement 3 bobines mais avec des structures statoriques qui garantissent toujours le faible couple résiduel du
moteur.

Le moteur représenté à la figure 8 présente 9 dents étroites (117 à 125) et 3 dents larges (111 à 113) portant 3 bobinages (114 à 116). Les dents larges non bobinées ont été ici converties en dents étroites ce qui a permis d'augmenter l'angle (140) entre la dent large bobinée et les dents adjacentes.

## Revendications

1. Moteur électrique polyphasé, formé par une partie statorique (1) excitée par des bobines électriques (41 à 46) et par un rotor (2) présentant N paires de pôles aimantés radialement en sens alternés, la partie statorique (1) présentant des dents larges (11 à 16) et des dents étroites (17 à 22) s'étendant radialement depuis une couronne annulaire (10), les largeurs de dents étant mesurées sur le diamètre intérieur du stator, les dents larges présentant une largeur (31) supérieure ou égale au double de la largeur (33) des dents étroites, le rapport entre la largeur (31) d'une dent large et la largeur (33) d'une dent étroite étant compris entre 2 et 8, la largeur d'encoche (32) étant supérieure à la largeur (33) d'une dent étroite **caractérisé en ce que** ledit stator comporte 12 dents, les bobinages étant disposés autour des dents larges.

2. Moteur électrique polyphasé selon la revendication 1, **caractérisé en ce que** les bobinages sont disposés autour des dents larges, **en ce que** le rapport entre la largeur (31) d'une dent large et la largeur (33) d'une dent étroite est compris entre 4 et 5.

3. Moteur polyphasé selon l'une au moins des revendications 1 ou 2, **caractérisé en ce que** le stator (1) présente un nombre de dents étroites égal au nombre de dents larges

4. Moteur polyphasé selon l'une au moins des revendications 1 à 3, **caractérisé en ce que** le stator (1) présente un nombre de dents étroites multiple du nombre de dents larges

5. Moteur polyphasé selon la revendication 1 **caractérisé en ce que** le stator (1) présente un bobinage sur chacune des dents larges.

6. Moteur polyphasé selon la revendication 1, 2 ou 3, **caractérisé en ce que** le stator (1) présente un bobinage sur une dent large sur deux.

7. Moteur triphasé selon l'une quelconque des revendications précédentes, **caractérisé en ce que** chaque dent bobinée présente dans le plan transversal une section trapézoïdale sensiblement constante.

8. Moteur triphasé selon l'une quelconque des revendications précédentes, les bobines étant bobinées séparément puis insérées dans le stator.

9. Moteur polyphasé selon l'une quelconque des revendications précédentes, **caractérisé en ce que** l'extrémité frontale de l'épanouissement polaire est située dans le plan de la face frontale intérieure de la bobine.

10. Moteur polyphasé selon l'une quelconque des revendications précédentes, **caractérisé en ce qu'**il comporte des éléments de détection de position agissant avec le rotor.

11. Moteur polyphasé selon l'une quelconque des revendications précédentes, **caractérisé en ce que** le stator (1) comporte des trous de fixation (47a à 47e) placés à l'intérieur d'un diamètre inférieur au diamètre extérieur des bobinages.

12. Moteur polyphasé selon l'une quelconque dès revendications précédentes, **caractérisé en ce que** le stator (1) présente sur sa surface externe des embrèvements (101 à 106) disposés entre les bobines.

## Patentansprüche

1. Mehrphasiger Elektromotor, der gebildet wird durch einen Statorteil (1), der durch elektrische Spulen (41 bis 46) erregt wird, und durch einen Rotor (2) mit N radial in wechselnder Richtung magnetisierten Polpaaren, wobei der Statorteil (1) breite Zähne (11 bis 16) und schmale Zähne (17 bis 22) aufweist, die sich von einem ringförmigen Kranz (10) aus radial erstrecken, wobei die Zahnbreiten am Innendurchmesser des Stators gemessen werden und die breiten Zähne eine Breite (31) größer/gleich der doppelten Breite (33) der schmalen Zähne aufweisen, wobei das Verhältnis der Breite (31) eines breiten Zahns zur Breite (33) eines schmalen Zahns 2 bis 8 beträgt, wobei die Breite der Einkerbung (32) größer als die Breite (33) eines schmalen Zahns ist, **dadurch gekennzeichnet, dass** besagter Stator 12 Zähne umfasst und die Spulen um die breiten Zähne herum angeordnet sind.

2. Mehrphasiger Elektromotor nach Anspruch 1, **dadurch gekennzeichnet, dass** die Spulen um die breiten Zähne herum angeordnet sind, und dadurch, dass das Verhältnis der Breite (31) eines breiten Zahns zur Breite (33) eine schmalen Zahns 4 und 5 beträgt.

3. Mehrphasiger Elektromotor nach mindestens einem der Ansprüche 1 oder 2, **dadurch gekennzeichnet, dass** der Stator (1) eine Anzahl an schmalen Zähnen aufweist, die identisch mit der Anzahl der breiten Zähne ist.

4. Mehrphasiger Motor nach mindestens einem der Ansprüche 1 bis 3, **dadurch gekennzeichnet, dass** der Stator (1) eine Anzahl an schmalen Zähnen aufweist, die ein Vielfaches der Anzahl der breiten Zähne sind.

5. Mehrphasiger Motor nach Anspruch 1, **dadurch gekennzeichnet, dass** der Stator (1) auf jedem der breiten Zähne eine Spule aufweist.

6. Mehrphasiger Motor nach Anspruch 1, 2 oder 3, **dadurch gekennzeichnet, dass** der Stator (1) auf jedem zweiten breiten Zahn eine Spule aufweist.

7. Dreiphasenmotor nach einem der vorhergehenden Ansprüche, **dadurch gekennzeichnet, dass** jeder Zahn mit Spule in der Querschnittsebene einen im Wesentlichen konstanten trapezförmigen Querschnitt aufweist.

8. Dreiphasenmotor nach einem der vorhergehenden Ansprüche, wobei die Spulen separat gewickelt und anschließend in den Stator eingesetzt werden.

9. Mehrphasiger Motor nach einem der vorhergehenden Ansprüche, **dadurch gekennzeichnet, dass** sich das vordere Ende der Polschuhe auf der Ebene der inneren Stirnseite der Spule befindet.

10. Mehrphasiger Motor nach einem der vorhergehenden Ansprüche, **dadurch gekennzeichnet, dass** er Elemente zur Erkennung der Position umfasst, die mit dem Rotor zusammenwirken.

11. Mehrphasiger Motor nach einem der vorhergehenden Ansprüche, **dadurch gekennzeichnet, dass** der Stator (1) Befestigungslöcher (47a bis 47e) umfasst, die im Innern eines Durchmessers platziert sind, der kleiner als der Außendurchmesser der Spulen ist.

12. Mehrphasiger Motor nach einem der vorhergehenden Ansprüche, **dadurch gekennzeichnet, dass** der Stator (1) an seiner Außenfläche Aussparungen (101 bis 106) aufweist, die zwischen den Spulen angeordnet sind.

## Claims

1. A polyphase motor formed by a stator part (1) excited by electric coils (41 to 46) and by a rotor (2) exhibiting N pairs of poles that are magnetised radially in alternate directions, with the stator part (1) exhibiting wide teeth (11 to 16) and narrow teeth (17 to 22) extending radially from an annular ring (10), with the width of the teeth being measured along the inner diameter of the stator, with the wide teeth having a width (31) which is greater than or equal to twice the width (33) of the narrow teeth, with the ratio of the width (31) of a wide tooth to the width (33) of a narrow tooth ranging from 2 to 8, with the width of the slot (32) being greater than the width (33) of a narrow tooth, **characterized in that** said stator includes 12 teeth, with the coils being arranged around the wide teeth.

2. An electric polyphase motor according to claim 1, **characterized in that** the coils are arranged around the wide teeth, **in that** the ratio of the width (31) of a wide tooth to the width (33) of a narrow tooth ranges from 4 to 5.

3. A polyphase motor according to at least one of claims 1 or 2, **characterized in that** the stator (1) exhibits a number of narrow teeth equal to the number of large teeth.

4. A polyphase motor according to at least one of claims 1 to 3, **characterized in that** the stator (1) exhibits a number of narrow teeth which is a multiple of the number of wide teeth.

5. A polyphase motor according to claim 1, **characterized in that** the stator (1) has a coil arranged on each of the wide teeth.

6. A polyphase motor according to claim 1, 2 or 3, **characterized in that** the stator (1) has a coil arranged on every second wide tooth.

7. A three-phase motor according to any one of the preceding claims, **characterized in that** each tooth with a coil exhibits, in the transverse plane, a substantially constant trapezoidal cross-section.

8. A three-phase motor according to any one of the preceding claims, with the coils being separately wound, and then inserted into the stator.

9. A polyphase motor according to any one of the preceding claims, **characterized in that** the front end of the pole shoe is located in the plane of the inner front face of the coil.

10. A polyphase motor according to any one of the preceding claims, **characterized in that** it comprises position sensing means acting with the rotor.

11. A polyphase motor according to any one of the preceding claims, **characterized in that** the stator (1) comprises mounting holes (47a to 47e) positioned within a diameter smaller than the outer diameter of the coils.

12. A polyphase motor according to any one of the preceding claims, **characterized in that** the stator (1) has, on its outer surface, recesses (101 to 106) arranged between the coils.
